# EUROPEAN PATENT APPLICATION

(11) **EP 4 772 833 A1**
(43) Date of publication of application: **08.07.2026**
(21) Application number: 24872203.5
(22) Date of filing: 24.09.2024
(51) Int. Cl.: G01C 15/00

(54) **MEASUREMENT MODULE AND THREE-DIMENSIONAL DATA MEASUREMENT SYSTEM USING SAME**

(30) Priority: 29.09.2023 JP 2023170443
(71) Applicant: Topcon Corporation, Tokyo 174-8580 (JP)
(72) Inventor: MOMIYAMA Homare, Tokyo 174-8580 (JP); SASAKI You, Tokyo 174-8580 (JP); KOMAGAMINE Kunpei, Tokyo 174-8580 (JP)
(74) Representative: Schmitt-Nilson Schraud Waibel Wohlfrom Patentanwälte Partnerschaft mbB
(86) International application number: PCT/JP2024/033979
(87) International publication number: WO 2025/070414

(57) **Abstract**

Provided are a new measuring module and a new three-dimensional data measuring system that enable efficient three-dimensional data measurement without a prism equipped pole. The measuring module (50) comprises a prism (51), an electronic distance meter (52), an inertial measurement unit (42), a communication unit (58) and at least one processor (60). The processor (60) is configured to calculate position coordinates of the measuring module based on prism position coordinates, posture information, and to calculate position coordinates of the irradiated point based on the position coordinates of the measuring module, the distance to the irradiated point, and the posture information. The processor (60) is configured to determine that the irradiated point falls within a scheduled-measurement-point range which is defined with a predetermined threshold around a scheduled measurement point, set in a data of the measurement range to measure the irradiated point and record measurement result.

## Description

### TECHNICAL FIELD

The disclosure relates to three-dimensional data measuring systems, and more particularly, to a measuring module equipped with a prism and three-dimensional data measuring system using a measuring module equipped with a prism and a surveying instrument.

### BACKGROUND

Three-dimensional data measuring systems have been conventionally used for "current surface measurement". Such measuring systems, comprising a total station having an auto-tracking function and a prism-equipped pole, and allow an operator to measure a measurement point by just placing the pole on the point while the total station automatically tracks the prism to measure the position coordinates of the prism. During the measurement, the operator is required to maintain the prism in a horizontal orientation by observing a bubble-level device attached to the prism or the pole. Thus, this operation imposes a significant burden on the operator, particularly when working hours are long. In addition, such systems require the operator to know the length of the pole in advance and input the value thereof into the system.

Patent literature 1 has disclosed a three-dimensional data measuring system comprising a Global Navigation Satellite System (GNSS) receiver, a tilt sensor, an azimuth sensor, and an electronic distance meter configured to measure a three-dimensional position of a point irradiated by the electronic distance meter without using a prism-equipped pole.

### Citation List

### Patent Literature

Patent Literature 1: JP 2007/248156 A1

### SUMMARY

### Technical Problem

The three-dimensional data measuring system disclosed in Patent Literature 1 enables measurement without using a pole but fails to allow measurement in indoor environments due to poor satellite-signal reception. In addition, even in outdoor environments with strong satellite-signal reception, the timing of measurement, which affects the number of available satellites or the geometric location of satellites, may deteriorate the accuracy of the measurement.

The present disclosure has been made in view of the above circumstances, and an object thereof is to provide a new measuring module and a new three-dimensional data measuring system that enable efficient acquisition of three-dimensional data without using a prism-equipped pole.

### Solution to Problem

To achieve the above object, a measuring module according to an aspect of the present disclosure has the following configurations.
1. A measuring module comprises: a prism that retroreflects incident light; an electronic distance meter configured to emit distance-measuring light toward a measurement range and receive reflected distance-measuring light from an irradiated point of the distance-measuring light, and to detect a distance to the irradiated point; an inertial measurement unit that measures three-dimensional acceleration and angular velocities to detect posture information; a communication unit configured to receive prism position coordinates; and, at least one processor configured to calculate position coordinates of the measuring module based on the prism position coordinates and the posture information, and calculate position coordinates of the irradiated point based on the position coordinates of the measuring module, the distance to the irradiated point, and the posture information; wherein the processor is configured to determine that the irradiated point falls within a scheduled-measurement-point range which is defined with a predetermined threshold around a scheduled measurement point, set in a data of the measurement range, to measure the irradiated point to record measurement result.
2. In the above aspect 1, it is preferable that the measurement range is partitioned into sections in a mesh manner, and that each section is set with the scheduled measurement point.
3. In the above aspect 2, it is preferable that the measuring module further comprises a display unit configured to display a measurement screen showing survey progress, and the display unit displays the survey progress for each section in a manner that allows the survey progress to be identified in real time.
4. In the above aspect 2 and 3, it is preferable that the measurement screen displays measured sections using a color scale in which the sections are shaded in different colors according to height values based on measurement results.
5. In the above aspect 1 to 4, it is preferable that the processor is configured to calculate an incident angle at which the distance-measuring light impinges on a measurement surface based on the posture information, and to determine that the incident angle falls within a range enabling measurement with a required accuracy to measure the irradiated point.
6. In the above aspect 1 to 5, it is preferable that the processor is configured to calculate an incident angle at which the distance-measuring light impinges on a measurement surface based on the posture information, to determine that the incident angle falls outside a range enabling measurement with a required accuracy, and to notify an operator of it.
7. In the above aspect 1 to 5, it is preferable that the measuring module comprises a measuring module body including at least the prism, the electronic distance meter, the inertial measurement unit, and at least one processor; and a measuring module controller including at least one processor and a display unit, wherein the measuring module body is attached to a mobile unit, and that the mobile unit is configured to be remotely controlled by the processor of the measuring module controller.

Further, a three-dimensional data measuring system according to another aspect of the present disclosure has the following configurations.
8. Three-dimensional data measuring system comprises: the measuring module according to any one of claims 1 to 7; and a surveying instrument configured to emit distance-measuring light toward the prism and receive reflected distance-measuring light to measure a distance to the prism and an angle of the prism, and to calculate position coordinates of the prism, equipped with an auto-tracking function, and including communication unit and configured to output the position coordinate of the prism to the measuring module via the communication unit of the surveying instrument.

### BRIEF DESCRIPTION OF DRAWINGS

FIG. 1 illustrates a schematic configuration of a three-dimensional data measuring system according to a first embodiment of the present disclosure.
FIG. 2 is a block diagram illustrating the system.
FIG. 3A illustrates how to set a measurement range in survey area data. which is used in the measuring system. FIG. 3B illustrates mesh like sections set in the measurement range.
FIG. 4 is a flowchart illustrating an example of processing of setting measurement conditions.
FIG. 5 is a flowchart illustrating an example of processing of the measuring module in a three-dimensional measurement using the system.
FIGS. 6A to 6C illustrate examples of measurement screen displayed on the measuring module.
FIGS. 7A to 7C illustrate relationships between an emission angle of distance-measuring light from the measuring module, an incident angle at which the distance-measuring light impinges onto a measurement surface, and a beam spot shape thereof.
FIG. 8 is a flowchart illustrating an example of processing of the measuring module in a three-dimensional data measurement using a three-dimensional data measurement system according to a modification of the first embodiment.
FIG. 9 illustrates measurement range data used in a three-dimensional data measuring system according to another modification of the first embodiment.
FIG. 10 illustrates a schematic configuration of a three-dimensional data measuring system according to a second embodiment of the present invention.
FIG. 11 is a block diagram illustrating the same system.

### ADVANTAGES OF INVENTION

According to the above aspects, a new measuring module and a new three-dimensional data measuring system that enable efficient three-dimensional measurement without use of a prism-equipped pole.

### DESCRIPTION OF EMBODIMENTS

Hereinafter, preferred embodiments of the present invention will be described with reference to the drawings, but the present invention is not limited thereto. In each embodiment, the same constituents are denoted by the same reference signs, and redundant description will be omitted as appropriate.

### I. Embodiment

### 1. Overall construction

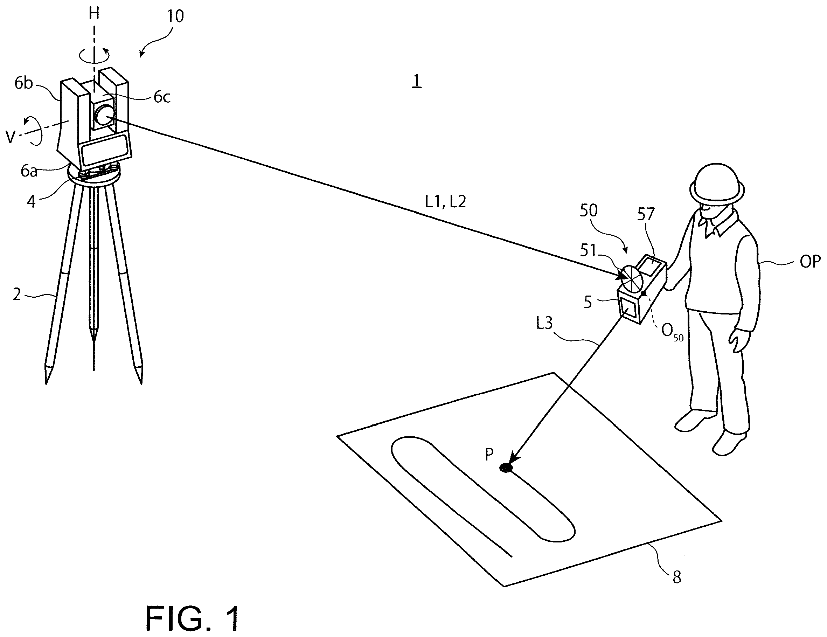

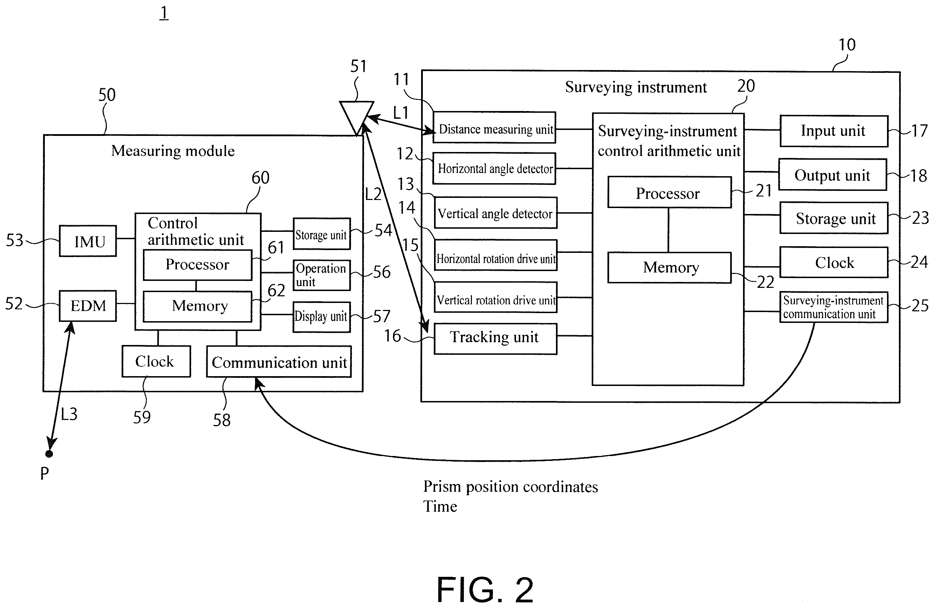

FIG. 1 illustrates a schematic configuration of a three-dimensional data measuring system 1 (hereinafter, simply referred to as "system 1"). The system 1 is preferably configured for current surface measurement at a construction site. FIG. 2 is a configuration block diagram of the system 1. The system 1 generally comprises a surveying instrument 10 and a measuring module 50.

In the illustrated example, the surveying instrument 10 is a motor-driven total station with an auto-tracking function. The surveying instrument 10 is installed at a known point with known coordinates and a known orientation angle. Note that, in the present detailed description, the expression "install a surveying instrument at a known point" represents not only installing the surveying instrument at a known point but also installing the surveying instrument at an arbitrary point whose coordinates can be determined by backward intersection or other methods.

As illustrated in FIG. 1, the surveying instrument 10 comprises, a base portion 6a, a bracket portion 6b configured to rotate horizontally about an H axis with respect to the base portion 6a, and a telescope 6c configured to rotate vertically about a V axis at the center of the bracket portion 6b. The base portion 6a is mounted on a leveling stand 4, which is attached to a tripod 2.

The measuring module 50 includes a housing 5 having a substantially rectangular parallelepiped shape and sized to be handheld. The housing 5 includes a prism 51 fixed to a front portion of the upper surface thereof. The prism 51 will be described later. The housing 5 also includes a display unit 57 disposed on a rear portion of the upper surface. The display unit 57 will be described later. This configuration allows an operator OP to irradiate a measurement target with distance-measuring light L3 while monitoring the display unit 57.

### 2. Surveying Instrument 10

As illustrated in FIG. 2, the surveying instrument 10 comprises a distance-measuring unit 11, a horizontal angle detector 12, a vertical angle detector 13, a horizontal rotation drive unit 14, a vertical rotation drive unit 15, a tracking unit 16, an input unit 17, an output unit 18, a surveying-instrument control arithmetic unit 20, a storage unit 23, a clock 24, and a surveying-instrument communication unit 25.

The distance-measuring unit 11 comprises a light transmitting unit, a distance measuring optical system, and a light receiving unit, which are not illustrated in FIG.2. The light transmitting unit includes a light emitting element such as a laser diode, which emits laser light as distance-measuring light L1. The light receiving unit includes a light receiving element such as avalanche photodiode. The distance-measuring unit 11, housed in the telescope 6c, is configured with the optical axis of the distance-measuring light L1 that coincides with the collimation axis of the telescope 6c.The distance-measuring unit 11 emits the distance-measuring light, such as infrared laser light, toward the prism 51 via the distance-measuring optical system and receives reflected light with the light receiving unit to measure a distance to the center of the prism 51 based on a phase difference or a time difference between the distance-measuring light and internal reference light.

The horizontal angle detector 12 and the vertical angle detector 13 are each implemented using an absolute encoder or an incremental encoder. The horizontal angle detector 12 detects a horizontal angle of the base portion 6a, that is, a horizontal angle of the collimation axis of the telescope 6c. The vertical angle detector 13 detects a vertical angle of the collimation axis of the telescope 6c.

The horizontal rotation drive unit 14 and the vertical rotation drive unit 15 are each implemented using a motor. The surveying-instrument control arithmetic unit 20 controls the horizontal rotation drive unit 14 and the vertical rotation drive unit 15. The horizontal rotation drive unit 14 drives a rotation shaft, provided on the base portion 6a, to horizontally rotate the bracket portion 6b. The vertical rotation drive unit 15 drives a rotation shaft, which supports the telescope 6c rotatably with respect to the bracket portion 6b, to vertically rotate the telescope 6c. Both of the drive units cooperatively rotate the telescope 6c in horizontal and vertical directions.

The tracking unit 16 comprises a tracking light transmitting unit, a tracking optical system, and a tracking light receiving unit, which are not illustrated in FIG.2. The tracking light transmitting unit includes a light emitting element such as a laser diode. The tracking light receiving unit includes a light receiving element such as a charge-coupled device (CCD) or a complementary metal-oxide-semiconductor (CMOS). The tracking unit 16 emits infrared laser light as tracking light L2, which has a wavelength different from that of the distance-measuring light L1. The tracking unit 16 captures landscape images in the direction of the collimation axis, including images captured with the tracking light L2 turned on and images captured with the tracking light L2 turned off. The tracking unit 16 provides both images to the surveying-instrument control arithmetic unit 20. The surveying-instrument control arithmetic unit 20 determines the center position of an image of the prism 51 which serves as the surveying target based on the difference between the two images and then calculates a position of the prism 51. Based on the calculated position of the prism 51, the surveying-instrument control arithmetic unit 20 instructs the horizontal rotation drive unit 14 and the vertical rotation drive unit 15 to maintain a displacement between the center of the prism 51 and the collimation axis of telescope within a certain value. This allows the telescope 6c to continuously point toward the prism 51.

The input unit 17 is an input device such as buttons and keys, to receive inputs from an operator, such as commands or configuration settings for measurement tasks and output the inputs to the surveying-instrument control arithmetic unit 20. The output unit 18 is a device that serves as a display for an operator, such as a liquid crystal display. The output unit 18 displays screens, such as a measurement condition setting screen and a measurement result check screen, under the control of the surveying-instrument control arithmetic unit 20. The input unit 17 and the output unit 18 may be integrated into a touch panel display.

The storage unit 23 is implemented using a computer-readable storage medium such as a hard disc drive (HDD) or a flash memory. The storage unit 23 stores programs for the surveying instrument 10 to execute various functions, such as a surveying function and the auto-tracking function. The storage unit 23 also stores various types of data, such as measurement data, acquired by the surveying instrument 10.

The clock 24 may be implemented using a system clock or a hardware clock. The clock 24 assigns timestamps to transmitted data to synchronize measurement timing with the measuring module 50.

The surveying-instrument communication unit 25 is a communication interface that facilitates information exchange between the surveying instrument 10 and the measuring module 50. Examples of communication means include Wi-Fi, Bluetooth (each a registered trademark), and infrared communication. The communication means are not limited thereto and may be implemented using other methods compliant with known wired and wireless communication standards. The surveying instrument 10 assigns timestamps to measurement result data of the prism measurement, which include position information of the prism, and transmits the measurement result data to the measuring module 50 via the surveying-instrument communication unit 25.

The surveying-instrument control arithmetic unit 20 comprises at least one processor 21 and at least one memory 22. The processor 21 may be implemented using a central processing unit (CPU), for example. The memory 22 may be implemented using a static random-access memory (SRAM) or a dynamic random-access memory (DRAM), for example. When the processor 21 is implemented using a processor such as a CPU that executes functions of the surveying instrument 10 in software, the processor 21 reads programs for implementing functions into the memory 22 and executes the programs to implement the functions.

In addition, the processor 21 may be implemented at least partially in hardware by using a complex programmable logic device (CPLD) or a field programmable gate array (FPGA).

The surveying-instrument control arithmetic unit 20 controls the tracking unit 16, the horizontal rotation drive unit 14, and the vertical rotation drive unit 15 so that the surveying instrument 10 automatically tracks the prism 51. The surveying-instrument control arithmetic unit 20 controls the distance-measuring unit 11, the horizontal angle detector 12, and the vertical angle detector 13 so that the surveying instrument 10 measures a distance to and an angle of the prism 51 at predetermined timing. Based on the distance and angle measurements of the prism 51, the surveying-instrument control arithmetic unit 20 calculates position coordinates of the center of the prism 51, assigns a timestamp to the calculation result, and transmits the result to the measuring module 50 via the surveying-instrument communication unit 25.

### 3. Configuration of Measuring Module 50

The measuring module 50 comprises the prism 51, an electronic distance meter (EDM) 52, an inertial measurement unit (IMU) 53, a storage unit 54, an operation unit 56, the display unit 57, a communication unit 58, a clock 59, and a control arithmetic unit 60.

The prism 51 is, for example, a so-called omnidirectional prism, formed by radially arranging a plurality of triangular pyramidal prisms to retroreflect incident light from all directions (360°). The prism 51 is not limited thereto and may be any prism used for surveying.

The electronic distance meter 52 comprises a light transmitting unit, a distance-measuring optical system, and a light receiving unit, which are not illustrated in FIG. 2. The light transmitting unit includes a light emitting element such as a laser diode and emits visible laser light as the distance-measuring light L3. The light receiving unit includes a light receiving element, such as an avalanche photodiode. The electronic distance meter 52 emits the distance-measuring light L3 from the light transmitting unit toward a measurement target and receives reflected distance-measuring light L3' from the measurement target. The electronic distance meter 52 determines the distance to a point irradiated with the distance-measuring light L3 based on a phase difference or a time difference between the distance-measuring light L3 and internal reference light.

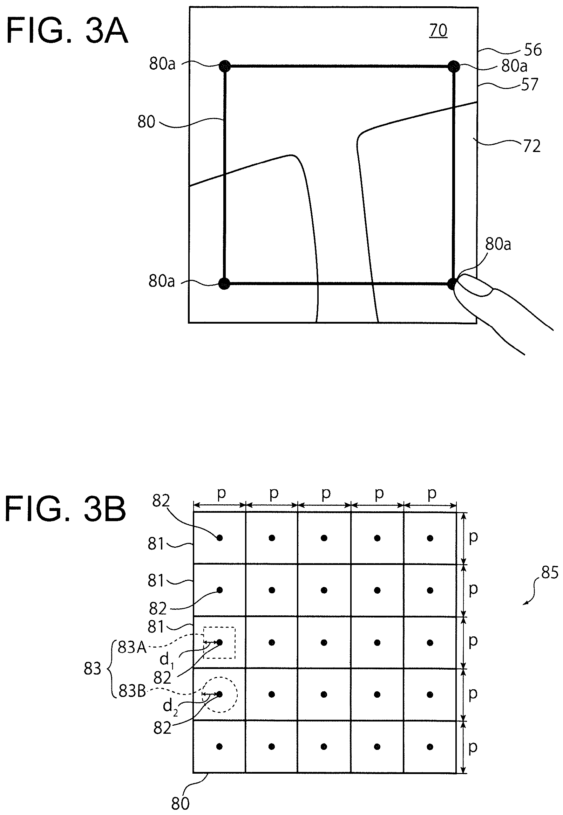

The inertial measurement unit 53 comprises a three-axis gyroscope and a three-axis accelerometer. The inertial measurement unit 53 detects posture information of the measuring module 50 by measuring angular velocities and accelerations in three axes (roll, pitch, and yaw) of the measuring module 50. The inertial measurement unit 53 is placed at the instrument center O₅₀ (FIG. 3) of the measuring module 50.

The positional relationship is predetermined among the center of the prism 51, the origin for distance measurement by the electronic distance meter 52, and the instrument center O₅₀. Further, the electronic distance meter 52 is configured to have the axis passing through the instrument center O₅₀. This allows the determination of position coordinates of the instrument center O₅₀, that is, position coordinates of the measuring module 50, based on position coordinates of the center of the prism 51 and the posture information of the measuring module 50.

The storage unit 54 is implemented using a computer-readable storage medium such as a hard disk drive (HDD) or a flash memory. The storage unit 54 stores programs for executing functions of the measuring module 50, which will be described later. The storage unit 54 also stores three-dimensional information data, acquired by the measuring module 50.

The operation unit 56 is an input device that includes an input mechanism, such as buttons and keys, to receive inputs from the operator, such as commands or configuration setting for the measuring module 50. The display unit 57 is implemented with a display such as a liquid crystal display or an organic electroluminescence (EL) display. The display unit 57 displays various screens such as input screens for measurement condition setting or a measurement screen, under the control of the control arithmetic unit 60. In the illustrated example, the operation unit 56 and the display unit 57 are integrated as a touch panel display. Furthermore, the operation unit 56 may include an audio input device such as a microphone in addition to buttons and keys.

The communication unit 58 is a communication interface that facilitates information exchange between the surveying instrument 10 and the measuring module 50. Although examples of communication means include Wi-Fi, Bluetooth (each a registered trademark), and infrared communication, any communication means compatible with the surveying-instrument communication unit 25 should be used. The communication unit 58 receives the position coordinates of the prism 51 from the surveying instrument 10.

The clock 59 is a device that keeps time and may be implemented with a system clock or a hardware clock. The clock 59 is synchronized with the clock 24 of the surveying instrument 10 and used for synchronizing measurement timing with the surveying instrument 10.

The control arithmetic unit 60 includes at least one processor 61, such as a CPU, and at least one memory 62, such as an SRAM or a DRAM. When the processor 61 executes functions of the surveying instrument 10 in software, the control arithmetic unit 60 reads programs for implementing functions of the measuring module 50 into the memory 62 and executes the programs to implement the functions. The processor 61 may be implemented at least partially in hardware by using a CPLD or an FPGA.

The control arithmetic unit 60 enables remote control of the surveying instrument 10, particularly, by sending instructions for measurement and auto-tracking to the surveying instrument 10 via the communication unit 58. The control arithmetic unit 60 acquires, in synchronization with the surveying instrument 10, the distance to the irradiated point, which is measured by the electronic distance meter 52, and the posture information of the measuring module 50, which is detected by the inertial measurement unit 53. The control arithmetic unit 60 calculates position coordinates of the measuring module 50, which is a position of the measuring module 50 as own position, based on the position coordinates of the prism 51 received from the measuring module 50, the detected posture information of the measuring module 50, and the predetermined positional relationship between the prism 51 and the instrument center O₅₀ of the measuring module 50. The control arithmetic unit 60 also calculates position coordinates of the irradiated point P of the distance-measuring light L3 based on the calculated position coordinates and the detected posture information of the measuring module 50, and measured distance value by the electronic distance meter 52.

The control arithmetic unit 60 read survey area data 72 to set a measurement range 80 on the survey area data 72. FIG. 3A illustrates how to set the measurement range 80, shown on the display unit 57. In the illustrated example, the survey area data 72 is map data. The measurement range 80 represents a region where three-dimensional data measurement is scheduled within the survey area 70. As illustrated in FIG. 3A, the operator OP may tap points on the display unit 57, which is a touch panel display, to input the points as four vertices defining a rectangular to select the rectangular as the measurement range 80. Alternatively, the operator OP may use a rectangular selection tool and swipe diagonally to define a rectangular region to set the measurement range 80. Although the measurement range 80 is a square in the illustrated example, the measurement range 80 can be set as a rectangle or a polygon other than a quadrilateral. Additionally, the operator OP may define a desired area having an arbitrary shape as the measurement range 80 by tracing a boundary of the desired area with a fingertip on the display unit 57 to set the area.

The control arithmetic unit 60 set sections in a mesh manner at a pitch p in the measurement range 80. FIG. 3B illustrates the measurement range 80 in FIG. 3A partitioned into sections in a mesh manner. Although the mesh pattern sections are superimposed on the survey area data 72 displayed on the actual display unit 57 in FIG. 3A, the survey area data 72 is omitted in FIG. 3B for convenience. In the illustrated example, each section is a square in relation to the square measurement range 80. The pitch p defines one side of each square i.e., the dimensions of each section. Each section needs not be limited to a square, it may also be a rectangle. Further, while each section generally has the same shape, it may have an irregular shape at the periphery of the measurement range 80 depending on the shape of the measurement range 80. The pitch p of 10 to 50 cm is preferable for example for a current surface measurement of construction work. Not limited to this, the pitch p can be defined as appropriate according to the size of the measurement range 80 and the required accuracy of survey results.

Each section has a scheduled measurement point 82 set at a predetermined position therein, for example at the center. The scheduled measurement point 82 is set with a scheduled-measurement-point range 83 which is defined as a predetermined distance range from a scheduled measurement point 82. FIG. 3B illustrates examples of the scheduled-measurement-point range 83 having different shapes as scheduled-measurement-point ranges 83A and 83B. The scheduled-measurement-point range 83A is defined as a square with a side length of 2d₁, centered at the scheduled measurement point 82. Furthermore, the scheduled-measurement-point range 83B is defined as a circle with a radius of d₂, centered at the scheduled measurement point 82. Hereinafter the scheduled-measurement-point ranges 83A and 83B are collectively referred to as the scheduled-measurement-point range 83 when they are not distinguished. It is assumed that the measured value at any point within the scheduled-measurement-point range 83 can be regarded as the measured value for the respective section. Note that the scheduled measurement points 82 and the scheduled-measurement-point ranges 83 do not necessarily need to be displayed on the display unit 57, and it is sufficient for them to be defined in the data.

The control arithmetic unit 60 determines whether the irradiated point P of the distance-measuring light L3 emitted from the electronic distance meter 52 toward the measurement range 8 falls within the scheduled-measurement-point range 83. When determining that the irradiated point P falls within the scheduled-measurement-point range 83, the control arithmetic unit 60 measure the irradiated point P to record the measured value as a measurement result.

### 4. Method of Using System 1

Next, method of using the system 1 will be described.

First, prior to use at a measurement site, the operator OP sets up the surveying instrument 10 at a known point and inputs coordinates and orientation angles into the surveying instrument 10.

The communication unit 58 of the measuring module 50 establishes a connection with the surveying-instrument communication unit 25 of the surveying instrument 10. The operator OP calibrates the measuring module 50. For calibration, for example, the operator OP positions the surveying instrument 10 and the measuring module 50 to face each other, and measures the prism 51 with the surveying instrument 10 to determine the direction of the measuring module 50. The operator OP uses the direction to set the inertial measurement unit 53 such that the roll, yaw and pitch angles thereof are zero degrees in a direction opposite to the facing direction of the measuring module 50.

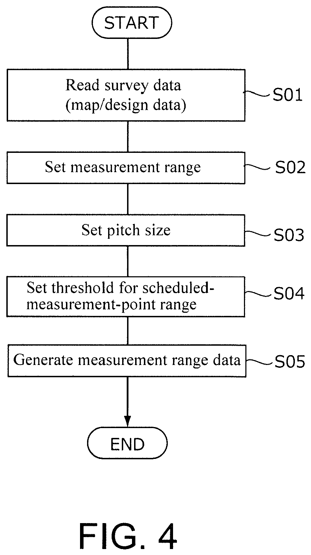

FIG. 4 is a flowchart illustrating an example of operations of measurement using the system 1.

Upon starting measurement, in step S01, the control arithmetic unit 60 read the survey area data 72. Specifically, the survey area data 72 is map data or design data of an area which the operator OP intends to survey. For example, the control arithmetic unit 60 may read the survey area data 72 stored in the storage unit 54. Alternatively, the control arithmetic unit 60 may read the survey area data 72 stored on a cloud server through the Internet by configuring the measuring module 50 to include a communication interface connectable to the Internet.

Next, in step S02, the control arithmetic unit 60 set the measurement range 80 in accordance with the input by the operator. For example, the operator may tap points on the survey area data 72 displayed on the display unit 57, which is a touch panel display, to input the points as four vertices to set the rectangular as the measurement range 80.

Next, in step S03, the control arithmetic unit 60 sets the size of the pitch p for defining the dimensions of each section for partitioning the measurement range 80 into sections in a mesh manner, in accordance with input by the operator. The operator may input the value for setting the pitch size by selecting from predetermined values or inputting a certain value in an input window, for example.

Next, in step S04, the control arithmetic unit 60 sets the threshold of the scheduled-measurement-point range 83 in accordance with an input by the operator OP. Or, the threshold of the scheduled-measurement-point range 83 may be set in advance. In this case, step S04 may be omitted,

Next, in step S05, based on the range and values set in steps S02 to S04, the control arithmetic unit 60 partitions the measurement range 80 into sections, set the scheduled measurement points 82 and the scheduled-measurement point ranges 83 in the sections to generate the measurement range data 85, and store them in the storage unit 54. FIG. 3B schematically illustrates the thus set measurement range data 85. The steps S01 to S05 are a preparatory process of the three-dimensional data measurement using the system 1. After step S05, operations proceed to step S11 and the subsequent steps as described below.

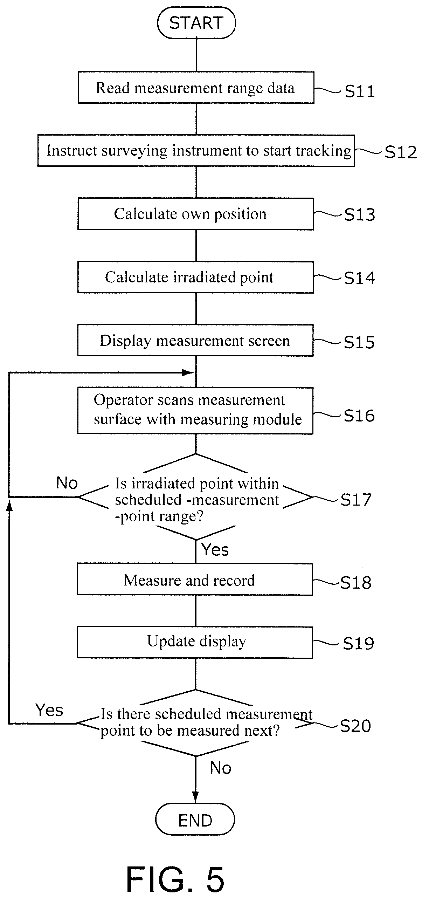

Main process of the three-dimensional data measurement using the system 1 will described. FIG. 5 is a flowchart illustrating an example of processing of the measuring module 50 in the three-dimensional data measurement.

Upon starting the survey, first, in step S11, the control arithmetic unit 60 read the measurement range data 85.

Next, in step S12, the control arithmetic unit 60 instructs the surveying instrument 10 to start measurement via the communication unit 58. Thereafter, the surveying instrument 10 tracks the prism 51, measures the prism at predetermined intervals, and send position coordinates of the prism 51 with timestamps to the measuring module 50.

Next, in step S13, the control arithmetic unit 60 receives the position coordinates of the prism 51 from the surveying instrument 10 and detects the posture information of the measuring module 50 in synchronization with the measurement of the position coordinates of the prism 51, to calculate position coordinates of the measuring module 50.

At the same time, in step S14, the control arithmetic unit 60 measures a distance to the irradiated point P in synchronization with the measurement of the position coordinates of the prism 51 to calculate position coordinates of the irradiated point P using the posture information of the measuring module 50.

Thereafter, the control arithmetic unit 60 calculates the position coordinates of the measuring module 50 and the position coordinates of the irradiated point P each time receiving the position coordinates of the prism 51 or at predetermined intervals. In step S15, the control arithmetic unit 60 displays the measurement screen 90 on the display unit 57.

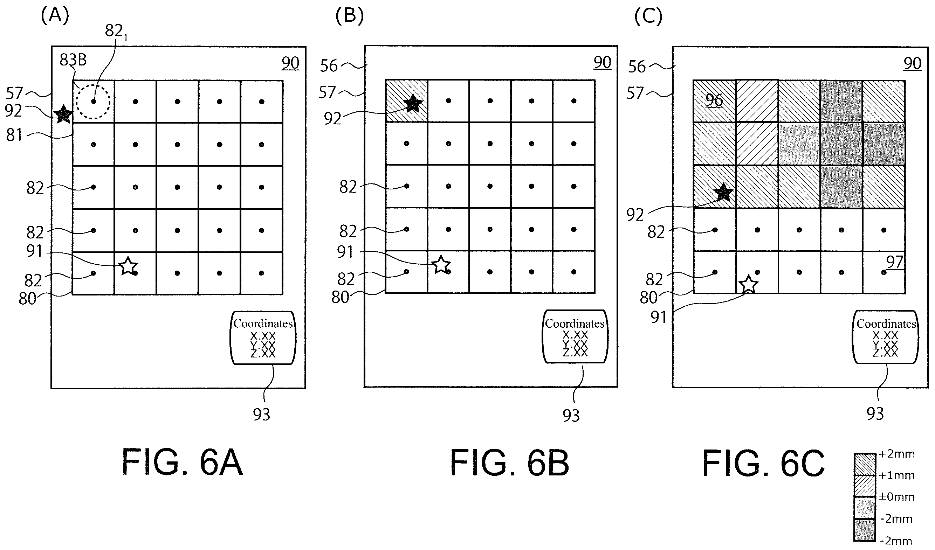

FIG. 6A illustrates an example of the measurement screen 90. The measurement screen 90 displays the measurement range 80, which is partitioned into sections in a mesh manner, including the scheduled measurement points 82, an own-position mark which represents the current position of the measuring module 50, and an irradiated position marker 92 which represents the position of the irradiated point P. In addition, the measurement screen 90 may also displays the coordinate values 93 of the current irradiated point P (corresponding to the irradiated point marker 92 on the measurement screen 90) numerically.

Next, in step S16, the operator OP begins scanning the measurement surface with the visible distance-measuring light L3 by operating the measuring module 50. The operator OP can proceed with scanning while monitoring the measurement range 80 and irradiated point marker 92 on the measurement screen 90, as well as the measurement range 8 and irradiated point P at the site. This ensures that the operator aims the distance-measuring light L3 at the point to be measured. This also allows the operator OP to easily direct the distance-measuring light L3 at the point to be measured.

For example, in the situation shown in FIG. 6A, if the operator OP intends to begin measurement from the upper-left section in which the scheduled measurement point 82₁ and the scheduled-measurement-point range 83B are set, the operator can bring the irradiated point marker 92 (actually, the irradiation point P) closer to the target scheduled measurement point 82₁ by moving the measuring module 50 slightly to the right while monitoring the irradiated point marker 92. In the illustrated example, the operator OP, thereafter, proceeds with the measurement while moving the measurement module from side to side by traversing the sections 81 starting from the top-left of the measurement screen 90, moving the measuring module 50 from left to right, then moving down one row and moving from right to left.

Next, in step S17, the control arithmetic unit 60 determines whether the irradiated point P falls within the scheduled-measurement-point range 83. The determination is made as follows.

For the square scheduled-measurement-point range 83A in FIG. 3B, assume that the coordinates of the scheduled measurement point 82 to be measured next are (x, y) and the threshold is d₁ The control arithmetic unit 60 determines that the irradiated point P falls within the scheduled-measurement-point range 83A, when the coordinates X and Y satisfy the conditions: x - d₁ < X < x + d₁ and y - d₁ < Y < y + d₁, wherein the coordinates of the current irradiated point P are (X, Y). For the circular scheduled-measurement-point range 83B in FIG. 3B, assume that the coordinates of the measurement target point 82 to be measured next are (x, y) and the threshold is d₂. The control arithmetic unit 60 determines that the irradiated point P falls within the scheduled-measurement-point range 83B when the coordinates X and Y satisfy the condition: (x - X)² + (y - Y)² < d₂², wherein the coordinates of the current irradiated point P are (X, Y).

Then, when the irradiated point P falls within the scheduled-measurement- point range 83 ("Yes" branch for step S17), in step S18 the control arithmetic unit 60 determines the calculated coordinate value of the irradiated point P as a measurement value of the corresponding section to store it in the storage unit 54.

When the irradiated point P falls outside the scheduled-measurement point range 83 ("No" branch for step S17), the control arithmetic unit 60 returns to step S16, the operator OP continues scanning by moving the measuring module 50 to adjust the irradiated point P to approach the scheduled measurement point 82.

After the control arithmetic unit 60 stores the measurement value in step S18, the process proceeds to step S19, in which the control arithmetic unit 60 updates the measurement screen 90 to show measurement progress. FIG. 6B illustrates an example of the measurement screen 90 updated after measuring a first measurement point. Specifically, the measurement screen 90 may display measured sections 96 and unmeasured sections 97 in different colors, thereby enabling the operator to recognize survey progress for each section in real time. More specifically, the unmeasured sections 97 may be displayed in white, while the measured sections 96 may be color-coded using a color scale based on height values (Z-coordinate values), allowing the operator OP to recognize a three-dimensional shape of the measured sections 96.

Next, in step S20, the control arithmetic unit 60 determines whether there is a next scheduled measurement point, and repeats steps S16 to S20 until no next scheduled measurement point remains. When measured all the scheduled measurement points, the control arithmetic unit 60 terminates the processing. FIG. 6C illustrates an example of the measurement screen 90 when the measurement is in progress. In FIG. 6C, the measurement screen 90 displays the measured sections 96 using a color scale based on height values as shown in the bottom. The control arithmetic unit 60 may store an updated measurement screen 90 each update. This embodiment enables acquisition of such three-dimensional data showing three-dimensional shape of the measurement surface 84.

### 5. Technical Effects

Thus, this embodiment includes the measuring module 50 that comprises the prism 51, the electronic distance meter 52, and the inertial measurement unit 53 and configured to acquire the position coordinates of the prism 51. Consequently, moving the measuring module 50 in any posture allows acquisition of coordinates of the irradiated point of the distance-measuring light L3. This enables three-dimensional data measurement of the measurement range without using a prism-equipped pole. Furthermore, since the system 1 is configured to acquire the position of the measuring module 50 based on measured value of the surveying instrument 10 rather than a GNSS receiver, the system 1 provides substantially equivalent measurement accuracy indoors and outdoors. Such configuration also eliminates the need to consider the number of satellites or a geometric configuration of the satellites.

Furthermore, the measuring module 50 preloads the data for the survey area 70 (survey area data 72) and partitions the measurement range 80 into sections in a mesh manner to set the scheduled measurement points 82 and further the scheduled-measurement-point ranges 83 around the corresponding scheduled measurement points 82, allowing the operator OP to scan the measurement range 80 with the distance-measuring light L3 by moving the handheld measuring module 50 and automatically initiating measurement when the irradiated point of the distance-measuring light falls within the scheduled-measurement-range 83. This eliminates the need for the operator OP to stop and hold the pole stationary to measure the prism at each measurement point, thereby reducing workload and shortening operation time.

Furthermore, in current surface measurements, it is preferable to partition the measurement range 80into sections in a mesh manner and set the scheduled measurement point 82 within each section 81. However, this is not mandatory, and it is also possible to simply set scheduled measurement points 82 within the measurement range 80 as needed. Such cases can achieve the same technical effects.

The measuring module 50 is configured to display the measurement screen 90 on the display, which shows the own position and the irradiated point P of the distance-measuring light L3. As the measurement screen 90 displays the measured sections 96 and the unmeasured sections 97 in a distinguishable manner, the operator OP can smoothly proceed, the measurement while monitoring survey progress on the measurement screen 90 in real time.

In addition, using visible light as the distance-measuring light L3 in the measuring module 50 allows the operator OP to observe the irradiated point P of the distance-measuring light L3 at a site while moving the measuring module 50, thereby improving operability. Furthermore, the system 1 is configured to display the measured sections 96 and the unmeasured sections 97 distinctively, updating the display in real time with each measurement. This allows the operator to easily identify unmeasured sections, enabling measurements without omission. Furthermore, displaying the measured sections 96 using a color scale based on their height values allows the operator OP to recognize a three-dimensional shape of the measurement range visually and in real time.

In the above description, the data of the survey area 70 (the survey area data 72) (FIG. 3A) has been regarded as map data, and the measurement range as a ground plane. The survey area data 72 may also be design data including three-dimensional computer-aided design (CAD) data, and the survey area is not limited to the ground plane but may also be other surfaces, such as walls, structural surfaces, or ceilings. In addition, providing the measuring module 50 in a portable size allows measurement over various measurement ranges. Thus, the system 1 can measure three-dimensional data of various measurement objects for various applications.

### 6. Modification 1

Next, a first modification of the present embodiment will be described. Prior to detailed description, relationships among an emission angle of the distance-measuring light L3 emitted from the measuring module 50, an incident angle at which the distance-measuring light L3 impinges onto a plane of the measurement range (hereinafter referred to as "measurement surface 84."), and a spot shape B₅₀ of the beam of the distance-measuring light L3 will be described.

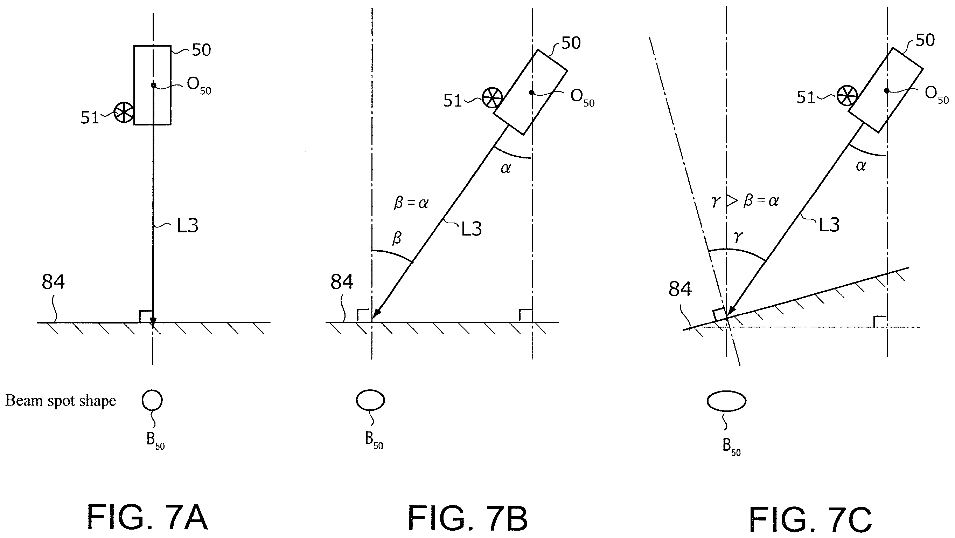

FIGS. 7A-7C illustrate the relationships among the incident angle at which the distance-measuring light L3 impinges onto measurement surface 84 and the corresponding spot shape of the beam B₅₀ of the distance-measuring light L3.

In the following description, an angle between the distance-measuring light L3 and a vertically downward direction is defined as the emission angle of the distance-measuring light L3. As shown in FIG. 7A, when the measurement surface 84 is horizontal and the measuring module 50 emits the distance-measuring light L3 at an emission angle of 0° relative to the measurement surface 84, the distance-measuring light L3 impinges onto the measurement surface 84 at an incident angle of 0°. In this case, the spot shape of the beam B₅₀ is substantially circular. On the other hand, as shown in FIG. 7B, when the measuring module 50 emits the distance-measuring light L3 at an emission angle α greater than 0° relative to the measurement surface 84, the incident angle β₁ is equal to the emission angle α. Here, as the emission angle α increases, the incident angle β increases, causing the spot shape of the beam B₅₀ to become a more flattened ellipse.

Further, as shown in FIG. 7C, when the measurement surface 84 is inclined such that a plane perpendicular to the measurement surface 84 faces away from the measuring module 50, even when the measuring module 50 emits the distance-measuring light L3 at the same emission angle α as in FIG. 7B, the incident angle γ on the measurement surface 84 is greater than the incident angle β in FIG. 7B. Accordingly, the spot shape of the beam B₅₀ becomes further flatter than that shown in FIG. 7B

As the spot shape of the beam B₅₀ becomes flatter, measurement error in a measurement value of the electronic distance meter 52 increases due to variations in a received light signal. Specifically, flattening of the spot shape increases the irradiated area on the measurement surface even at the same distance, thereby causing the received light signal to contain components reflected from different distances and increasing distance measurement error. Alternatively, when the measurement surface exhibits anisotropic scattering, a greater incident angle leads to a decrease in the amount of received light, thereby lowering the signal-to-noise ratio and increasing distance measurement error. In other words, the measurement accuracy of the electronic distance meter 52 depends on the incident angle on the measurement surface 84. Furthermore, the incident angle is determined based on the emission angle of the distance-measuring light L3, which is derived from the posture information of the measuring module 50, and the three-dimensional shape of the measurement surface 84, which includes its inclination and irregularities.

From the above, the system according to Modification 1 is configured such that, when measuring three-dimensional data of the next scheduled measurement point, if the incident angle of the distance-measuring light L3 results in a measurement value that does not meet a required accuracy, the system discard the measurement value and instead instructs the operator to adjust the position and posture of the measuring module 50 to acquire a measurement value with the required accuracy.

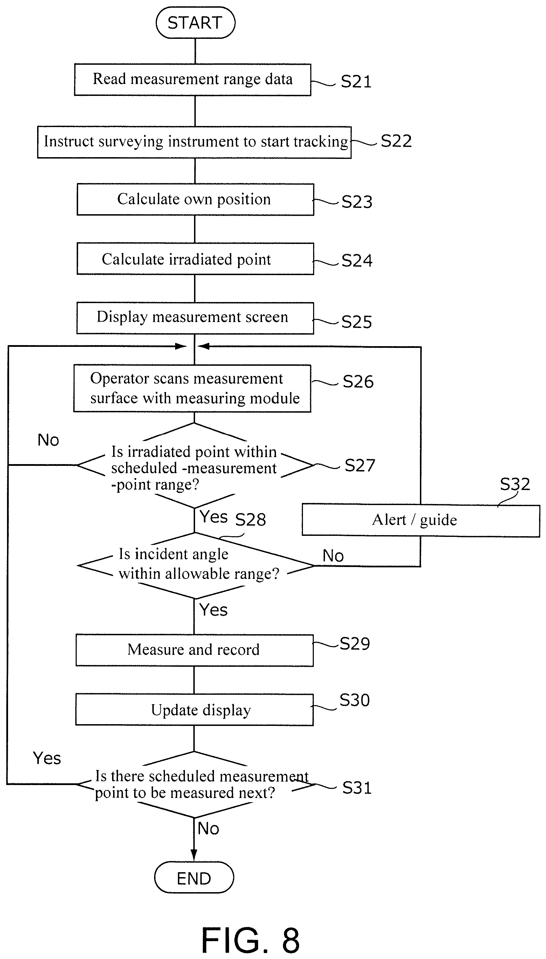

Hereinafter a three-dimensional data measuring method according to Modification 1 will be described. The mechanical configuration of the system according to Modification 1 is similar to the system 1 according to the first embodiment. FIG. 8 illustrates a flowchart of an example of processing by the measuring module 50 in three-dimensional data measurement according to Modification 1.

Upon starting measurement, in step S21 to S27, similar to step S11 to S17, the control arithmetic unit 60 determines the irradiated point P falls within the scheduled-measurement-point range 83 to be measured next while acquiring the posture information of the measuring module 50, the distance to the irradiated point P, and the relationship between the center of the prism 51 and the instrument center O₅₀ in synchronization with the measurement of the position coordinates of the prism 51, to calculate the position coordinates of the measuring module 50 and the position coordinates of the irradiated point P.

When the irradiated point P falls within the scheduled-measurement-point range ("Yes" branch for step S27), the process proceeds to step S28 and the control arithmetic unit 60 determines whether current incident angle at which the distance-measuring light L3 impinges onto the measurement surface 84 is within a range that enables measurement with the required accuracy.

Specifically, for example, when the measurement surface is a ground plane, and the survey area data 72 is map data without three-dimensional shape information of the measurement surface 84, the control arithmetic unit 60 assumes that the measurement surface 84 extends along a horizontal plane and calculates the emission angle of the distance-measuring light L3 and the incident angle at which the distance-measuring light L3 impinges onto the measurement surface 84, based on the posture information of the measuring module 50.

Alternatively, for example, when the survey area data 72 is CAD data including three-dimensional shape information, the control arithmetic unit 60 calculates the incident angle at which the distance-measuring light L3 impinges onto the measurement surface 84 based on the three-dimensional shape information of the measurement surface 84 and the emission angle of the distance-measuring light L3 calculated from the posture information of the measuring module 50.

The control arithmetic unit 60 determines whether thus calculated incident angle falls within allowable range that enables measurement with the required accuracy.

When the incident angle falls within the allowable range ("Yes" branch for step S28), the process proceeds to step 29, and the control arithmetic unit 60 determines the calculated position of the irradiated point P as the measurement value of the section and store it in the storage unit 54.

When the incident angle falls outside of the allowable range ("No" branch for step S28), the process proceeds to step 32, and the control arithmetic unit 60 issues an alert notifying that the incident angle falls outside the allowable range and/or provide a guidance instructing the operator OP to adjust emitting direction of the distance-measuring light L3 to allow the incident angle to remain within the allowable range. The alert and the guidance may include, for example, displaying on the display unit 57. Further, the alert and guidance may include providing an audio notification and emitting a warning sound. For this purpose, the measuring module 50 may further comprise a speaker. Then, the control arithmetic unit 60 repeats steps S26 to S28 until determining that the incident angle falls within the allowable range in step S28.

After the control arithmetic unit 60 stores the measurement value, the process proceeds to step S30, and the control arithmetic unit 60 updates the measurement screen 90 as in step S19. Then, the control arithmetic unit 60 repeats steps S26 to S31 until the control arithmetic unit 60 determines that there is no next scheduled measurement point 82 remains.

In this way, the system according to Modification 1 is configured to calculate the incident angle at which the distance-measuring light L3 impinges onto the measurement surface 84 based on the posture information of the measuring module 50 to maintain the incident angle within the allowable range that enables the measurement with the required accuracy, thereby ensuring measurement accuracy for the three-dimensional data measurement.

### 8. Modification 2

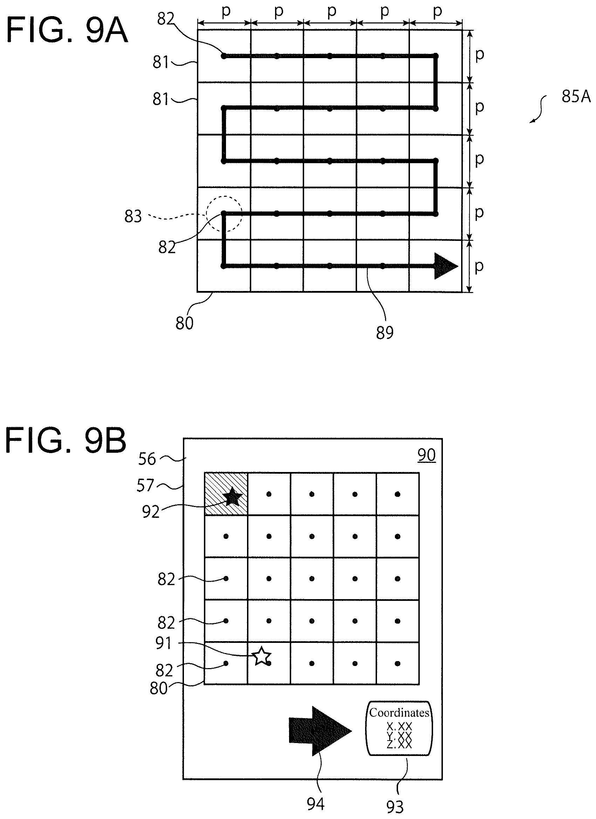

FIG. 9A illustrates measurement range data 85A according to another modification of Modification 2 of the first embodiment. The measurement range data 85A is based on the measurement range data 85 with a measurement sequence among the sections (hereinafter the measurement sequence is referred to as measurement route 89.) defined. As the measurement range data 85A includes the measurement route 89, the measuring module 50 can display a guidance marker that teaches the operator OP to sequentially move the measuring module 50 toward the next scheduled measurement point 82 set along the measurement route 89 when scanning with the distance-measuring light L3 in steps S16 and S26. Setting an efficient route as the measurement route 89 allows the operator to perform efficient measurements simply by scanning with the distance-measuring light L3 along the measurement path, thereby improving work efficiency.

### 9. Other modifications

The system 1 according to this embodiment may further include the following modifications. When setting the measurement range 80, if the survey area data 72 includes CAD data, the measurement range 80 may be configured to allow selection of a specific area within the design data, such as the surface of one wall of a building.

### II. Second embodiment

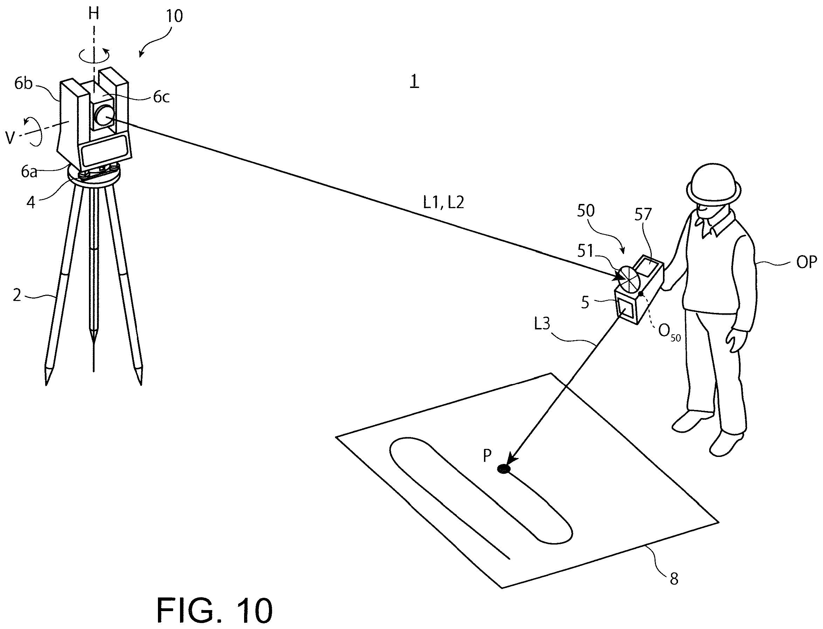

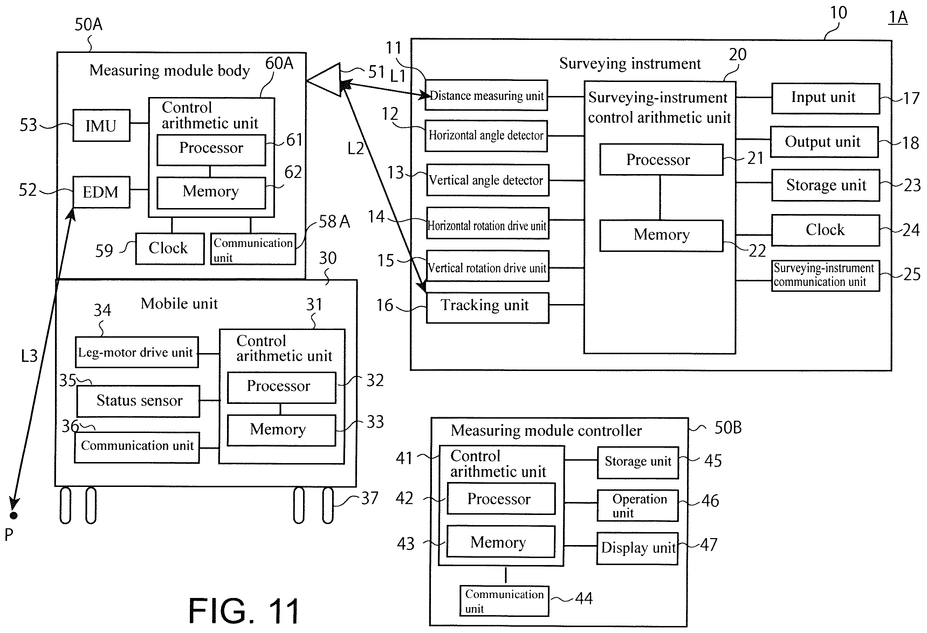

FIG. 10 illustrates a schematic configuration of a three-dimensional data measuring system 1A according to a second embodiment of the present invention. FIG. 11 is a block diagram of the system 1A. The system 1A comprises a surveying instrument 10; and a measuring module body 50A, a measuring module controller 50B, and a mobile unit 30. The measuring module body 50A is mounted on the upper portion of the mobile unit 3.

The surveying instrument 10 has a same mechanical configuration of the surveying instrument of the system 1.

The measuring module body 50A comprises the same prism 51, electronic distance meter 52, inertial measurement unit 53, and clock 59 as in the measuring module 50 of the system 1. The system 1A comprises a control arithmetic unit 60A and the communication unit 58A instead of the control arithmetic unit 60 and the communication unit 58. The control arithmetic unit 60A, , measures the distance to the irradiated point with the electronic distance meter 52, detects the posture information with the inertial measurement unit 53, and send the measured distance value to the irradiated point P and the detected posture information of the measuring module body 50A to the measuring module controller 50B via the communication unit 58A.

The measuring module controller 50B is implemented using a portable terminal computer such as, smartphone and Personal Digital Assistant (PDA). The measuring module controller 50B comprises a control arithmetic unit 41, a communication unit 44, a storage unit 45, an operation unit 46, and a display unit 47. The control arithmetic unit 41 is implemented using a processor and a memory with equivalent to those used in the measuring module 50. The operation unit 46 and the display unit 47 are integrally configured as a touch panel display. The control arithmetic unit 41 receives the distance value measured by the electronic distance meter 52 and the posture information detected by the inertial measurement unit 53 via the communication unit 58A of the measuring module body 50A.

Further, the control arithmetic unit 41, similar to the control arithmetic unit 60, enables remote control of the surveying instrument 10 and transmits instructions for measurement and auto-tracking via the communication unit 44. The control arithmetic unit 41 acquires the distance to the irradiated point measured by the electronic distance meter and the posture information of the measuring module body 50A in synchronization with the measurement of the surveying instrument. The control arithmetic unit 41 calculates the position coordinates of the measuring module body 50A based on the position coordinates of the prism 51 received from the surveying instrument 10, the posture information of the measuring module body 50A, and the known relationship between the prism 51 and the instrument center O_{50.} of the measuring module body 50A. The control arithmetic unit 41 calculates position coordinates of the irradiated point of the distance-measuring light L3 based on the calculated position coordinates of the measuring module body 50A, the posture information of the measuring module body 50A and the distance value measured by the electronic distance meter 52. The control arithmetic unit 41 determines whether the irradiated point P falls within the scheduled-measurement-point range 83, and when determined that the irradiated point P falls within the scheduled-measurement-point range 83, initiate to measure the irradiated point P to store the measured value as measurement result of the irradiated point P. Further, the control arithmetic unit 41, similar to the control arithmetic unit 60, set the measurement range 80 to perform three-dimensional data measurement. The control arithmetic unit 41 is configured to remotely control the mobile unit 30.

In the illustrated example, the mobile unit 30 is a quadruped robot. The mobile unit 30 comprises a control arithmetic unit 31, a leg-motor drive unit 34, a status sensor 35, and a communication unit 36.

The control arithmetic unit 31 is a processing unit comprising at least one processor 32, such as a CPU, and at least one memory 33, such as SRAM and DRAM. The processor 32 may be partially implemented in hardware. The control arithmetic unit 31 controls the leg-motor drive unit 34 to change the posture of the mobile unit and move its position. The control arithmetic unit 31 controls the posture and movement of the mobile unit 30 in accordance with remote commands from the control arithmetic unit 41 of the measuring module controller 50B. This allows the measuring module controller 50B to remotely control the mobile unit 30.

The mobile unit 30 has four legs 37 provided on the underside thereof. Each leg 37 is equipped with joint motors at the joints thereof. The leg-motor drive unit 34 enables the mobile unit 30 to walk on four legs by driving the joint motors while detecting the motor rotation speed, velocity, and load on the joints using the status sensor 35. This allows the measuring module body 50A mounted on the mobile unit 30 to change the posture to adjust the emission angle of the distance-measuring light L3.

This configuration enables the measuring module body 50A to perform three-dimensional data measurement equivalent to that performed by the measuring module 50 by remotely controlling via the measuring module controller 50B by the operator.

Thus, this configuration enables the measuring module body 50A and the measuring module controller 50B to work in conjunction with the surveying instrument 10 to achieve the same effects as in the first embodiment. Furthermore, mounting the measuring module body 50A on the mobile unit 30 enables three-dimensional data measurement in hazardous locations that are inaccessible to operators.

Note that the mobile unit 30 is not limited to the dog-shaped robot described in the above example; for example, automobiles or drones are available for the mobile unit 30.

The foregoing describes preferred embodiments of the present invention. However, the above embodiments are provid1ed for illustrative purpose only and do not limit the present invention. They can be combined based on the knowledge of those skilled in the art, and such forms are also included within the scope of the present invention.

### Reference Signs

- 1, 1A: :Three-dimensional data measuring system
- 10: : Surveying instrument
- 30: : Mobile unit
- 31: : Control arithmetic unit
- 36: : Communication unit
- 41: : Control arithmetic unit
- 44: : Communication unit
- 47: : Display unit
- 50: : Measuring module
- 51: : Prism
- 52: : Electronic distance meter
- 53: : Inertial measurement unit
- 57: : Display unit
- 58: : Communication unit
- 58A: : Communication unit
- 60, 60A:: Control arithmetic unit
- 70: : Survey area
- 80: : Measurement range
- 80a: : Measurement surface
- 82: : Scheduled measurement point
- 83, 83A, 83B: : Scheduled-measurement-point range
- 84: : Measurement surface
- 90: : Measurement screen
- 94: : Guidance maker
- 82₁: : Scheduled measurement point

## Claims

1. A measuring module comprising:
a prism that retroreflects incident light;
an electronic distance meter configured to emit distance-measuring light toward a measurement range and receive reflected distance-measuring light from an irradiated point of the distance-measuring light, and to detect a distance to the irradiated point;
an inertial measurement unit that measures three-dimensional acceleration and angular velocities to detect posture information;
a communication unit configured to receive prism position coordinates;
and,
at least one processor configured to calculate position coordinates of the measuring module based on the prism position coordinates and the posture information, and calculate position coordinates of the irradiated point based on the position coordinates of the measuring module, the distance to the irradiated point, and the posture information;
wherein the processor is configured to determine that the irradiated point falls within a scheduled-measurement-point range which is defined with a predetermined threshold around a scheduled measurement point, set in a data of the measurement range, to measure the irradiated point to record measurement result.

2. The measuring module according to claim 1,
wherein the measurement range is partitioned into sections in a mesh manner, and,
wherein each section is set with the scheduled measurement point.

3. The measuring module according to claim 2, further comprising a display
unit configured to display a measurement screen showing survey progress, wherein the display unit displays the survey progress for each section in a manner that allows the survey progress to be identified in real time.

4. The measuring module according to claim 3,
wherein the measurement screen displays measured sections using a color scale in which the sections are shaded in different colors according to height values based on measurement results.

5. The measuring module according to claim 1,
wherein the processor is configured to calculate an incident angle at which the distance-measuring light impinges onto a measurement surface based on the posture information, and to determine that the incident angle falls within a range enabling measurement with a required accuracy to measure the irradiated point.

6. The measuring module according to claim 1,
wherein the processor is configured to calculate an incident angle at which the distance-measuring light impinges onto a measurement surface based on the posture information, to determine that the incident angle falls outside a range enabling measurement with a required accuracy, and to notify an operator of it.

7. The measuring module according to claim 1,
comprising:
a measuring module body including at least the prism, the electronic distance meter, the inertial measurement unit, and at least one processor; and
a measuring module controller including at least one processor and a display unit,
wherein the measuring module body is attached to a mobile unit, and
wherein the mobile unit is configured to be remotely controlled by the processor of the measuring module controller.

8. Three-dimensional data measuring system comprising:
the measuring module according to any one of claims 1 to 7; and
a surveying instrument configured to emit distance-measuring light toward the prism and receive reflected distance-measuring light to measure a distance to the prism and an angle of the prism, and to calculate position coordinates of the prism,
equipped with an auto-tracking function, and
including communication unit and configured to output the position coordinate of the prism to the measuring module via the communication unit of the surveying instrument.
